# EUROPÄISCHE PATENTSCHRIFT

(11) **EP 3 296 828 B1**
(45) Veröffentlichungstag und Bekanntmachung des Hinweises auf die Patenterteilung: **24.08.2022**
(21) Anmeldenummer: 16188876.3
(22) Anmeldetag: 15.09.2016
(51) Int. Cl.: G05B 19/418, H04L 61/4511, H04L 101/30

(54) **VERFAHREN ZUR BEREITSTELLUNG EINES ERWEITERTEN NAMENSDIENSTES FÜR EIN INDUSTRIELLES AUTOMATISIERUNGSSYSTEM**
METHOD FOR PROVIDING AN EXPANDED NAME SERVICE FOR AN INDUSTRIAL AUTOMATION SYSTEM
PROCEDE DESTINE A FOURNIR UN SERVICE DE DENOMINATION ETENDU POUR UN SYSTEME D'AUTOMATISATION INDUSTRIEL

(43) Veröffentlichungstag der Anmeldung: 21.03.2018
(73) Patentinhaber: Siemens Aktiengesellschaft, 80333 München (DE)
(72) Erfinder: Albrecht, Harald, 90475 Nürnberg (DE); Höme, Stephan, 91126 Schwabach (DE); Müller, Felix, 91052 Erlangen (DE); Talanis, Thomas, 91336 Heroldsbach (DE)

(56) Entgegenhaltungen:
- EP-A1- 2 991 320
- EP-A1- 2 996 311
- EP-A1- 3 041 199
- Anonymous: "Domain Name System - Wikipedia", , 31. August 2016 (2016-08-31), XP055353784, Gefunden im Internet: URL:https://en.wikipedia.org/w/index.php?t itle=Domain_Name_System&oldid=737118898 [gefunden am 2017-03-10]

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

In WO 2007/144364 A1 ist ein Verfahren zur Vernetzung einer automatisierten Anlage beschrieben, die zumindest eine Zelle mit einem Subnetz umfasst. Das Subnetz ist über einen Router an ein weiteres Subnetz der automatisierten Anlage angebunden. Zur Vernetzung der automatisierten Anlage wird eine Multicastgruppe bereitgestellt, die sich über beide Subnetze erstreckt. Mittels der Multicastgruppe wird eine Kommunikationsnetzadresse einer Kommunikationsnetzschnittstelle einer Baugruppe detektiert. Dabei ist die Baugruppe der Multicastgruppe zuvor über die Kommunikationsnetzadresse beigetreten, und die Kommunikationsnetzschnittstelle ist zuvor an das Subnetz angeschlossen worden. Über die Kommunikationsnetzadresse wird ein Name an die Kommunikationsnetzschnittstelle der Baugruppe zugewiesen. In einem weiteren Schritt erfolgt eine Ermittlung einer weiteren Kommunikationsnetzadresse der Kommunikationsnetzschnittstelle der Baugruppe, die zumindest einen Teil einer numerischen Repräsentation des Namens aufweist.

Aus EP 2940926 A1 ist ein Verfahren zur Konfiguration eines Kommunikationsgeräts innerhalb eines industriellen Automatisierungssystems bekannt, bei dem eine Konfigurationseinheit des Kommunikationsgeräts ein Datagramm mit einer Konfigurationsanforderung an einen Konfigurationsserver übermittelt. Der Konfigurationsserver weist dem Kommunikationsgerät auf die Konfigurationsanforderung zumindest einen ersten topologischen Gerätenamensbestandteil zu, der einer räumlichen oder hierarchischen Anordnung des Konfigurationsservers zugeordnet ist. Durch jede weiterleitende Verteilereinheit wird ein weiterer topologischer Gerätenamensbestandteil ergänzt, der einer räumlichen oder hierarchischen Anordnung der jeweiligen weiterleitenden Verteilereinheit zugeordnet ist. Die Konfigurationseinheit des Kommunikationsgeräts erzeugt aus den topologischen Gerätenamensbestandteilen und einem innerhalb seines Teilnetzes eindeutigen Namensbestandteil dessen Gerätenamen.

In EP 2940972 A1 ist eine Bereitstellung eines Namensdienstes innerhalb eines industriellen Kommunikationssystems beschrieben, bei dem Router-Bekanntgaben mit Namensinformationen aus überlagerten Teilnetzen durch unterlagerten Teilnetzen zugeordnete Router entgegen genommen und um einen dem jeweiligen Router zugeordneten topologischen bzw. hierarchischen Namensbestandteil ergänzt und innerhalb des jeweiligen unterlagerten Teilnetzes verbreitet werden. Kommunikationsendgeräte erzeugen aus topologischen bzw. hierarchischen Namensbestandteilen und einem innerhalb ihres jeweiligen Teilnetzes eindeutigen Namensbestandteil selbständig ihren Gerätenamen.

EP 2975477 A1 betrifft ein Verfahren zur Registrierung von Gerätenamen aus einem industriellen Automatisierungssystem bei einem Kommunikationsnetz-Namensdienst. Mittels einer Regelbasis geräteindividuell wird festgelegt, für welche Kommunikationsgeräte des industriellen Automatisierungssystems eine Registrierung ihres jeweiligen Gerätenamens beim Kommunikationsnetz-Namensdienst zulässig bzw. erforderlich ist. Mittels geräteseitiger dezentraler Namensdienst-Agenten werden Kommunikationsnetzadressen von Kommunikationsgeräten an einen zentralen Namensdienst-Agenten des industriellen Automatisierungssystems gemeldet. Bei einer zu registrierenden Name-Adress-Zuordnung übermittelt der zentrale Namensdienst-Agent eine die Name-Adress-Zuordnung umfassende Registrierungsanforderung an den Kommunikationsnetz-Namensdienst. Innerhalb des industriellen Automatisierungssystems kann nur der zentrale Namensdienst-Agent Registrierungsanforderungen zur Verarbeitung an den Kommunikationsnetz-Namensdienst übermitteln.

EP 2 991 320 A1, EP 3 041 199 A1 und EP 2 996 311 A1 offenbaren Verfahren zur Ermittlung von Kommunikationsgerätenamen innerhalb eines industriellen Automatisierungssystems, wobei Name-Adress-Zuordnungen zwischen Gerätenamen und Kommunikationsnetzadressen erfasst werden und wobei anhand der Name-Adress-Zuordnungen auf eine Namensauflösungsanfrage eine zugeordnete Kommunikationsnetzadresse bereitgestellt wird.

Aus EP 3059930 A1 ist bekannt, dass zur Konfiguration eines Kommunikationsgeräts eines industriellen Automatisierungssystems aus zumindest einem mittels Routerbekanntgabe-Nachrichten durch zumindest einen innerhalb eines Teilnetzes zugeordneten Router übermittelten Präfix und aus einem geräteindividuellen Schnittstellenidentifikator selbständig eine dem Kommunikationsgerät zugeordnete Kommunikationsnetzadresse erzeugt wird. Das Kommunikationsgerät fragt bei zumindest einem Server eines Namensdienst-Systems entsprechend einem Namensauflösungsprotokoll ab, welche Kommunikationsnetzadressen seinem Kommunikationsgerätnamen zugeordnet sind. Die beim Server des Namensdienst-Systems abgefragten Kommunikationsnetzadressen werden auf eine Übereinstimmung mit dem Präfix überprüft. Das Kommunikationsgerät ordnet sich nur die beim Server des Namensdienst-Systems abgefragten Kommunikationsnetzadressen zu, die eine Übereinstimmung mit dem durch den Router übermittelten Präfix aufweisen.

In industriellen Automatisierungssystemen bestehen aufgrund technischer Rahmenbedingungen mehrere Namenssysteme für Automatisierungsgeräte, so dass ein einzelnes Automatisierungsgerät mehrere zugeordnete Namen haben kann. Zum einen werden Automatisierungsgeräte über ihren jeweiligen Hostnamen adressiert, der als Fully Qualified Domain Name (FQDN) mittels eines Domain Name System (DNS) in eine Kommunikationsnetzadresse aufgelöst wird, die üblicherweise IPv4- oder IPv6-basiert ist. Im Rahmen von Planung und Instandhaltung einer technischen Anlage werden für Anlagenkomponenten darüber hinaus Anlagenkennzeichen verwendet, beispielsweise entsprechend DIN 40719-2 oder EN 81346. Diese Anlagenkennzeichen befinden sich sehr häufig auf Beschriftungen an Anlagenkomponenten bzw.

Automatisierungsgeräten. Automatisierungs- bzw. Kommunikationsgeräten kann also insbesondere jeweils ein Fully Qualified Domain Name und ein Anlagenkennzeichen zugeordnet sein.

Der vorliegenden Erfindung liegt die Aufgabe zugrunde, ein einfach realisierbares Verfahren zur Bereitstellung eines Namensdienstes innerhalb eines industriellen Automatisierungssystems zu schaffen, das ein zuverlässiges Ansprechen von Automatisierungs- bzw. Kommunikationsgeräten auch über Anlagenkennzeichen ermöglicht.

Diese Aufgabe wird erfindungsgemäß durch ein Verfahren mit den in Anspruch 1 genannten Merkmalen gelöst. Vorteilhafte Weiterbildungen der vorliegenden Erfindung sind in den abhängigen Patentansprüchen angegeben.

Entsprechend dem erfindungsgemäßen Verfahren zur Bereitstellung eines erweiterten Namensdienstes für ein industrielles Automatisierungssystem werden in einem zumindest einen Namensdienst-Server umfassenden Namensdienstsystem Name-Adress-Zuordnungen zwischen Gerätenamen und Kommunikationsnetzadressen für Automatisierungs- bzw. Kommunikationsgeräte erfasst. Anhand dieser Name-Adress-Zuordnungen wird auf eine Namensauflösungsanfrage eine zugeordnete Kommunikationsnetzadresse bereitgestellt. Dabei weisen im Namensdienstsystem erfasste Gerätenamen eine durch eine Baumstruktur repräsentierte hierarchische Gliederung auf. Die Baumstruktur umfasst einen Wurzelknoten, innere Knoten und Endknoten.

Erfindungsgemäß werden im Namensdienstsystem zusätzlich zu den Name-Adress-Zuordnungen Zuordnungen zwischen Gerätenamen und Anlagenkennzeichen für Automatisierungs- bzw. Kommunikationsgeräte erfasst. Die Gerätenamen können insbesondere Fully Qualified Domain Namen sein. Die Anlagenkennzeichen werden innerhalb derselben Baumstruktur wie die Gerätenamen erfasst, und den Anlagekennzeichen jeweils in der Baumstruktur zugeordnete Endknoten umfassen einen Verweis auf den Gerätenamen jeweils zugeordnete Endknoten. Alternativ dazu können Zwischenknoten für Anlagekennzeichen einen Verweis auf Anlageneinheiten jeweils zugeordnete Zwischenknoten umfassen. Die Verweise auf den Gerätenamen jeweils zugeordnete Endknoten oder auf Anlageneinheiten jeweils zugeordnete Zwischenknoten erfolgen vorzugsweise mittels CNAME Resource Records oder DNAME Resource Records. Bei einer Anfrage zur Auflösung eines Anlagenkennzeichens wird anhand der Zuordnungen zwischen Gerätenamen und Anlagenkennzeichen ein Gerätename ermittelt und für diesen eine Namensauflösungsanfrage zur Ermittlung einer zugeordneten Kommunikationsnetzadresse durchgeführt.

Mit der vorliegenden Erfindung können Anlagenbetreiber oder -instandhalter Anlagenkennzeichen direkt von Automatisierungs- bzw. Kommunikationsgeräten ablesen und anhand des jeweiligen Anlagenkennzeichens mittels eines üblichen Web-Browsers direkt auf ein Automatisierungs- bzw. Kommunikationsgerät zugreifen. Dies ermöglicht eine effizientere Durchführung von Wartungs- oder Instandhaltungsprozessen in einem industriellen Automatisierungssystem. Darüber hinaus können Zuordnungen zwischen Geräte- bzw. Hostnamen bei laufendem Betrieb eines industriellen Automatisierungssystems erfasst bzw. aktualisiert werden. Insbesondere sind zur Nutzung der vorliegenden Erfindung in einem üblichen Web-Browser keine Browsererweiterungen oder Eingriffe in bestehende Software-Architekturen notwendig.

Entsprechend der vorliegenden Erfindung werden die Gerätenamen und die Anlagenkennzeichen von Automatisierungs- bzw. Kommunikationsgeräten einer Automatisierungsanlage innerhalb separater anlagenindividueller Teilbäume der Baumstruktur verwaltet. Dabei umfasst der Wurzelknoten des Teilbaums für die Gerätenamen einen Verweis auf den zugeordneten Wurzelknoten des Teilbaums für die Anlagenkennzeichen. Der Verweis auf den zugeordneten Wurzelknoten des Teilbaums für die Anlagenkennzeichen kann beispielsweise durch einen Text Resource Record im Wurzelknoten des Teilbaums für die Gerätenamen erfolgen. Vorzugsweise bildet der Wurzelknoten des Teilbaums für die Gerätenamen einen Zonenkopf des Teilbaums für die Gerätenamen, während der Wurzelknoten des Teilbaums für die Anlagenkennzeichen einen Zonenkopf des Teilbaums für die Anlagenkennzeichen bildet. Dabei sind die Zonenköpfe jeweils durch einen Start of Authority Resource Record gekennzeichnet.

Bei einer Erfassung eines Anlagenkennzeichens wird entsprechend der vorliegenden Erfindung der zugeordnete Gerätename ermittelt. Anhand des ermittelten Gerätenamens wird dann der Wurzelknoten des Teilbaums für die Gerätenamen ermittelt. Der zugeordnete Wurzelknoten des Teilbaums für die Anlagenkennzeichen wird wiederum anhand des ermittelten Wurzelknotens des Teilbaums für die Gerätenamen ermittelt. Für das zu erfassende Anlagenkennzeichen wird dann ein Endknoten unterhalb des ermittelten Wurzelknotens des Teilbaums für die Anlagenkennzeichen erzeugt. Entsprechend einer weiteren vorteilhaften Ausgestaltung des erfindungsgemäßen Verfahrens werden die Anlagenkennzeichen auf Basis einer vorgegebenen Codierungsregel entsprechend Automation Domain Name Algorithmus oder entsprechend RFC 3405 in Verbindung mit RFC 2483 codiert und entsprechend der vorgegebenen Codierungsregel codiert durch den Namensdienst-Server gespeichert. Somit können für die Anlagenkennzeichen über in Domain Name Systemen verwendbare Zeichen hinaus Sonderzeichen oder regionale Buchstabensätze verwendet werden. Beispielsweise kann für eine Anlagenkennzeichen-basierte Adressierung eines Automatisierungs- bzw. Kommunikationsgeräts eine Benutzereingabe eines Anlagenkennzeichens angefordert werden. In diesem Fall wird ein durch einen Benutzer eingegebenes Anlagenkennzeichen entsprechend der vorgegebenen Codierungsregel codiert und entsprechend der vorgegebenen Codierungsregel codiert für eine Anlagenkennzeichen-Auflösung an den Namensdienst-Server übermittelt. Der Namensdienst-Server führt dann für ein entsprechend der vorgegebenen Codierungsregel codiertes Anlagenkennzeichen eine Auflösung des Anlagenkennzeichens in eine zugeordnete Kommunikationsnetzadresse durch.

Die vorliegende Erfindung wird nachfolgend an einem Ausführungsbeispiel anhand der Zeichnung näher erläutert. Es zeigt
- Figur 1: ein Automatisierungsgerät mit einem FQDN-Gerätenamen sowie einem Anlagenkennzeichen und einen DNS-Server zur Verwaltung jeweils eines Namensbaums für FQDN-Gerätenamen und Anlagenkennzeichen,
- Figur 2: eine Darstellung einer Verknüpfung von Endknoten des Namensbaums für Anlagenkennzeichen mit Endknoten des Namensbaums für FQDN-Gerätenamen,
- Figur 3: eine Darstellung einer Verknüpfung eines Wurzelknotens des Namensbaums für FQDN-Gerätenamen mit einem Wurzelknoten des Namensbaums für Anlagenkennzeichen,
- Figur 4: eine schematische Darstellung einer Anlagenkennzeichen-Auflösung.

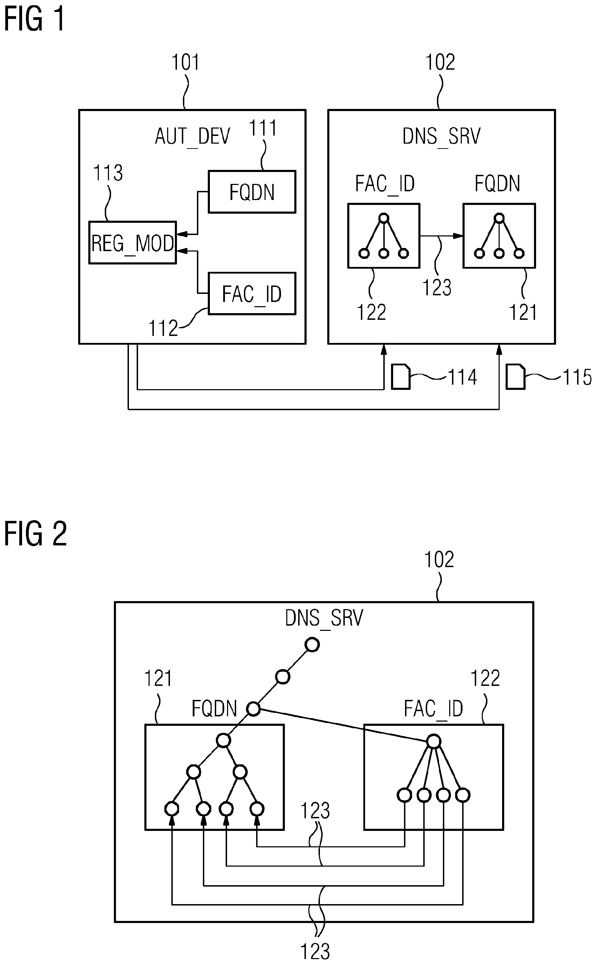

In Figur 1 ist eine Anordnung mit einem Automatisierungsgerät 101, dem sowohl ein FQDN-Gerätename 111 als auch ein Anlagenkennzeichen 112 zugeordnet ist, und einem DNS-Server 102 dargestellt, der sowohl einen Namensbaum 121 für FQDN-Gerätenamen als auch einen Namensbaum für Anlagenkennzeichen 122 verwaltet. Das Automatisierungsgerät 101 kann beispielsweise eine speicherprogrammierbare Steuerung sein. Mittels DNS-Update-Requests 114, 115 entsprechend RFC 2136 fordert ein DNS-Registrierungsmodul 113 des Automatisierungsgeräts 101 eine Erfassung seines FQDN-Gerätenamens 111 bzw. seines Anlagenkennzeichens 112 sowie seiner Kommunikationsnetzadresse durch den DNS-Server 102 an.

Zur Bereitstellung eines erweiterten Namensdienstes für ein industrielles Automatisierungssystem erfasst der DNS-Server 102 Name-Adress-Zuordnungen zwischen FQDN-Gerätenamen und Kommunikationsnetzadressen für Automatisierungs- bzw. Kommunikationsgeräte. Anhand dieser Name-Adress-Zuordnungen stellt der DNS-Server 102 auf eine Namensauflösungsanfrage eine zugeordnete Kommunikationsnetzadresse bereit. Im DNS-Server 102 erfasste FQDN-Gerätenamen weisen eine durch eine Baumstruktur repräsentierte hierarchische Gliederung auf, wobei die Baumstruktur einen Wurzelknoten, innere Knoten und Endknoten umfasst. Die Kommunikationsnetzadressen werden durch den DNS-Server 102 als IP-Adressen in Form eines oder mehrerer A/AAAA Resource Records erfasst bzw. aktualisiert.

Zusätzlich zu den Name-Adress-Zuordnungen werden im DNS-Server 102 Zuordnungen zwischen FQDN-Gerätenamen und Anlagenkennzeichen erfasst. Die Anlagenkennzeichen werden innerhalb derselben Baumstruktur wie die FQDN-Gerätenamen erfasst. Dabei umfassen den Anlagekennzeichen jeweils in der Baumstruktur zugeordnete Endknoten einen Verweis 123 auf den FQDN-Gerätenamen jeweils zugeordnete Endknoten (siehe auch Figur 2). Sollen FQDN-Gerätenamen im Namensdienstsystem weiter strukturiert werden und beispielsweise Teilanlagen oder Anlageneinheiten repräsentieren, können Zwischenknoten für Anlagekennzeichen einen Verweis auf Anlageneinheiten jeweils zugeordnete Zwischenknoten umfassen. Die Verweise auf den FQDN-Gerätenamen jeweils zugeordnete Endknoten oder auf Anlageneinheiten jeweils zugeordnete Zwischenknoten erfolgen im vorliegenden Ausführungsbeispiel mittels CNAME Resource Records entsprechend RFC 1034 und 1035 oder DNAME Resource Records entsprechend RFC 6672.

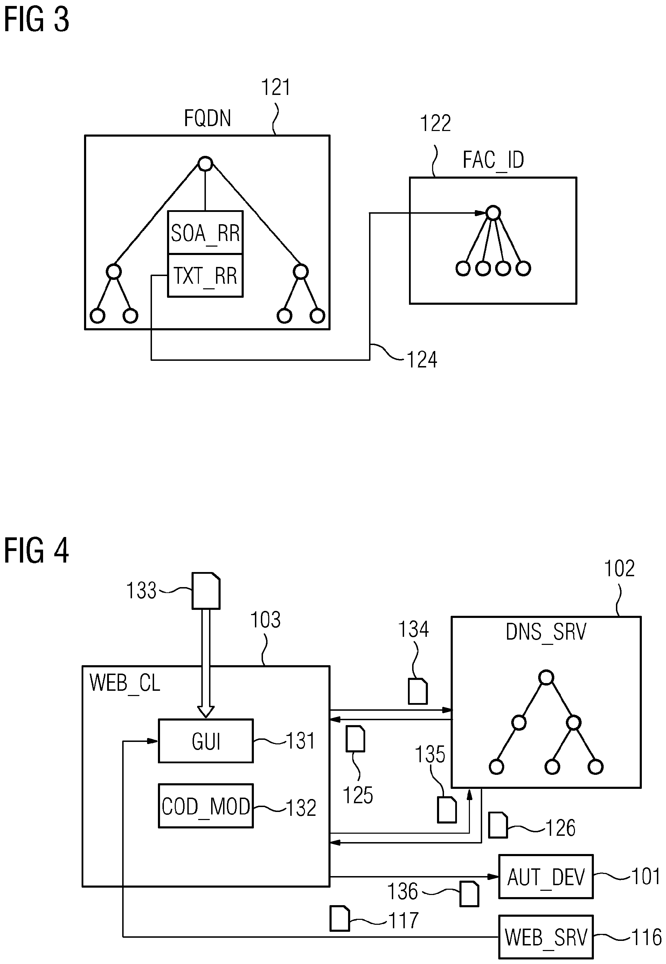

Die FQDN-Gerätenamen und die Anlagenkennzeichen von Automatisierungsgeräten einer Automatisierungsanlage werden innerhalb separater anlagenindividueller Namensbäume 121, 122 der Baumstruktur verwaltet. Im vorliegenden Ausführungsbeispiel umfasst der Wurzelknoten des Namensbaums 121 für die FQDN-Gerätenamen entsprechend Figur 3 einen Verweis 124 auf den zugeordneten Wurzelknoten des Namensbaums 122 für die Anlagenkennzeichen. Dieser Verweis 124 auf den zugeordneten Wurzelknoten des Namensbaums 122 für die Anlagenkennzeichen erfolgt durch einen Text Resource Record im Wurzelknoten des Namensbaums 121 für die FQDN-Gerätenamen.

Der Wurzelknoten des Namensbaums 121 für die FQDN-Gerätenamen bildet einen Zonenkopf des Namensbaums 121 für die FQDN-Gerätenamen, während der Wurzelknoten des Namensbaums 122 für die Anlagenkennzeichen einen Zonenkopf des Namensbaums 122 für die Anlagenkennzeichen bildet. Die Zonenköpfe sind jeweils durch einen Start of Authority Resource Record gekennzeichnet. Mit dem Verweis 124 vom Wurzelknoten des Namensbaums 121 für die FQDN-Gerätenamen auf den Wurzelknoten des Namensbaums 122 für die Anlagenkennzeichen kann eine wiederholte manuelle und mitunter fehlerträchtige Konfiguration anlagenspezifischer Information entfallen, da diese Information muss nur an genau einer Stelle im anlagenindividuellen Namensbaum 121 für die FQDN-Gerätenamen hinterlegt werden. Separate Namensbäume 121, 122 für die FQDN-Gerätenamen und für die Anlagenkennzeichen ermöglichen einen flexiblen Betrieb von DNS-Servern, da FQDN-Gerätenamen und Anlagenkennzeichen in getrennten DNS-Zonen verwaltet werden und beispielsweise zur Lastverteilung über verschiedene DNS-Server bereitgestellt werden können. Trotzdem müssen IP-Adress-Einträge (A/AAAA-RR) nur an einer Stelle gepflegt werden, nämlich am üblichen Ort im Namensbaum 121 für die FQDN-Gerätenamen.

Die Anlagenkennzeichen werden für eine Erfassung im DNS-Server 102 DNS-konform codiert, beispielsweise mittels ADNA-Algorithmus (Automation Domain Names for Applications). Alternativ dazu kann eine Codierung der Anlagenkennzeichen unter Zuhilfenahme einer DDDS DNS Datenbank entsprechend RFC 3404 unter Kontrolle ebenfalls im DNS-Server 102 hinterlegter Codierungsregeln erfolgen, beispielsweise entsprechend RFC 3405 in Verbindung mit RFC 2483. Damit ist es möglich, die Codierung von Anlagenkennzeichen im Namensbaum 122 für die Anlagenkennzeichen entsprechend individuellen Anforderungen anzupassen, ohne dass hierzu Anpassungen am Registrierungsmodul 113 des jeweiligen Automatisierungsgeräts 101 erforderlich sind.

Entsprechend Figur 4 ist ein typischer Ablauf bei einer Auflösung des Anlagenkennzeichens 112 des Automatisierungsgeräts 101 in dessen Kommunikationsnetzadresse dargestellt. Beispielsweise stellt ein dem Automatisierungsgerät 101 zugeordneter Web-Server 116 ein HTML-Dokument 117 an eine Rechnereinheit 103 mit einer graphischen Benutzerschnittstelle 131 für eine Eingabe eines zu adressierenden Anlagenkennzeichens 133 bereit. Die Rechnereinheit übermittelt daraufhin eine Meldung 134 mit einer Anfrage zur Ermittlung des Wurzelknotens des anlagenindividuellen Namensbaums 122 für die Anlagenkennzeichen, an dem anzuwendende Codierungsregeln für die Anlagenkennzeichen hinterlegt sind. Der DNS-Server 102 beantwortet diese Meldung 134 mit einer Meldung 125, in der die anzuwendenden Codierungsregeln für die Anlagenkennzeichen angegeben sind. Ein durch die Rechnereinheit 103 implementiertes Codierungsmodul 132 codiert anschließend das eingegebene zu adressierende Anlagenkennzeichens 133 entsprechend den anzuwendenden Codierungsregeln. Die Rechnereinheit 103 übermittelt dann eine Meldung 135 mit einem HTTP GET Request für einen dynamisch generierten Uniform Resource Identifier (URI). Dabei umfasst der Uniform Resource Identifier den Wurzelknoten des anlagenindividuellen Namensbaums 122 für die Anlagenkennzeichen und das entsprechen den anzuwendenden Codierungsregeln codierte Anlagenkennzeichen. Im DNS-Server 102 wird für diesen dynamisch generierten Uniform Resource Identifier eine Namensauflösung ausgeführt, wobei dem Verweis 123 vom codierten Anlagenkennzeichen 112 auf den FQDN-Gerätenamen 111 mit den gesuchten A/AAAA Resource Records gefolgt wird. Die Meldung 135 mit dem HTTP GET Request wird durch den DNS-Server 102 mit einer Meldung 126 beantwortet, welche die gesuchten A/AAAA Resource Records umfasst. Damit kann die Rechnereinheit 103 eine Meldung 136 an das Automatisierungsgerät 102 zum Abruf gewünschter Statusinformationen oder zur Übermittlung von Steuerungsbefehlen adressieren.

## Patentansprüche

1. Verfahren zur Bereitstellung eines erweiterten Namensdienstes für ein industrielles Automatisierungssystem, bei dem
- in einem zumindest einen Namensdienst-Server (102) umfassenden Namensdienstsystem Name-Adress-Zuordnungen zwischen Gerätenamen (111) und Kommunikationsnetzadressen für Automatisierungs- und/oder Kommunikationsgeräte (101) erfasst werden, anhand derer auf eine Namensauflösungsanfrage eine zugeordnete Kommunikationsnetzadresse bereitgestellt wird, wobei im Namensdienstsystem erfasste Gerätenamen eine durch eine Baumstruktur repräsentierte hierarchische Gliederung aufweisen und die Baumstruktur einen Wurzelknoten, innere Knoten und Endknoten umfasst,
**dadurch gekennzeichnet, dass**
- im Namensdienstsystem zusätzlich zu den Name-Adress-Zuordnungen Zuordnungen zwischen Gerätenamen (111) und Anlagenkennzeichen (112) entsprechend DIN 40719-2 oder EN 81346 für Automatisierungs- und/oder Kommunikationsgeräte (101) erfasst werden,
- die Gerätenamen und die Anlagenkennzeichen von Automatisierungs- und/oder Kommunikationsgeräten einer Automatisierungsanlage innerhalb separater anlagenindividueller Teilbäume (121, 122) der Baumstruktur verwaltet werden und der Wurzelknoten des Teilbaums (121) für die Gerätenamen einen Verweis auf den zugeordneten Wurzelknoten des Teilbaums (122) für die Anlagenkennzeichen umfasst,
- die Anlagenkennzeichen (112) innerhalb derselben Baumstruktur wie die Gerätenamen (111) erfasst werden und den Anlagekennzeichen jeweils in der Baumstruktur zugeordnete Endknoten einen Verweis (123) auf den Gerätenamen jeweils zugeordnete Endknoten umfassen,
- bei einer Erfassung eines Anlagenkennzeichens der zugeordnete Gerätename ermittelt wird,
- anhand des ermittelten Gerätenamens der Wurzelknoten des Teilbaums für die Gerätenamen ermittelt wird,
- anhand des ermittelten Wurzelknotens des Teilbaums für die Gerätenamen der zugeordnete Wurzelknoten des Teilbaums für die Anlagenkennzeichen ermittelt wird,
- für das zu erfassende Anlagenkennzeichen ein Endknoten unterhalb des ermittelten Wurzelknotens des Teilbaums für die Anlagenkennzeichen erzeugt wird,
- bei einer Anfrage (135) zur Auflösung eines Anlagenkennzeichens (112) anhand der Zuordnungen (123) zwischen Gerätenamen und Anlagenkennzeichen ein Gerätename (111) ermittelt und für diesen eine Namensauflösungsanfrage zur Ermittlung einer zugeordneten Kommunikationsnetzadresse durchgeführt wird.

2. Verfahren nach Anspruch 1,
bei dem der Verweis auf den zugeordneten Wurzelknoten des Teilbaums für die Anlagenkennzeichen durch einen Text Resource Record entsprechend RFC 1035 im Wurzelknoten des Teilbaums für die Gerätenamen erfolgt.

3. Verfahren nach einem der Ansprüche 1 bis 2,
bei dem der Wurzelknoten des Teilbaums für die Gerätenamen einen Zonenkopf des Teilbaums für die Gerätenamen bildet, bei dem der Wurzelknoten des Teilbaums für die Anlagenkennzeichen einen Zonenkopf des Teilbaums für die Anlagenkennzeichen bildet und bei dem die Zonenköpfe jeweils durch einen Start of Authority Resource Record entsprechend RFC 1035 gekennzeichnet sind.

4. Verfahren nach einem der Ansprüche 1 bis 3,
bei dem die Verweise auf den Gerätenamen jeweils zugeordnete Endknoten oder auf Anlageneinheiten jeweils zugeordnete Zwischenknoten mittels CNAME Resource Records entsprechend RFC 1034 und 1035 oder DNAME Resource Records entsprechend RFC 6672 erfolgen.

5. Verfahren nach einem der Ansprüche 1 bis 4,
bei dem die Anlagenkennzeichen auf Basis einer vorgegebenen Codierungsregel entsprechend Automation Domain Name Algorithmus oder entsprechend RFC 3405 in Verbindung mit RFC 2483 codiert und entsprechend der vorgegebenen Codierungsregel codiert durch den Namensdienst-Server gespeichert werden.

6. Verfahren nach Anspruch 5,
bei dem für eine Anlagenkennzeichen-basierte Adressierung eines Automatisierungs- und/oder Kommunikationsgeräts eine Benutzereingabe eines Anlagenkennzeichens angefordert wird, bei dem ein durch einen Benutzer eingegebenes Anlagenkennzeichen entsprechend der vorgegebenen Codierungsregel codiert und entsprechend der vorgegebenen Codierungsregel codiert für eine Anlagenkennzeichen-Auflösung an den Namensdienst-Server übermittelt wird und bei dem der Namensdienst-Server für ein entsprechend der vorgegebenen Codierungsregel codiertes Anlagenkennzeichen eine Auflösung des Anlagenkennzeichens in eine zugeordnete Kommunikationsnetzadresse durchführt.

## Claims

1. Method for providing an expanded name service for an industrial automation system, in which
- in a name service system comprising at least one name service server (102), name-address assignments between device names (111) and communication network addresses are registered for automation devices and/or communication devices (101), on the basis of which an assigned communication network address is provided in response to a name resolution request, wherein device names registered in the name service system have a hierarchical structure represented by a tree structure, and the tree structure comprises a root node, internal nodes and end nodes,
**characterized in that**,
- in addition to the name-address assignments, assignments between device names (111) and plant identification codes (112) in accordance with DIN 40719-2 or EN 81346 for automation devices and/or communication devices (101) are registered in the name service system,
- the device names and the plant identification codes of automation devices and/or communication devices of an automation plant are administered within separate plant-specific partial trees (121, 122) of the tree structure, and the root node of the partial tree (121) for the device names comprises a reference to the assigned root node of the partial tree (122) for the plant identification codes,
- the plant identification codes (112) are registered within the same tree structure as the device names (111), and end nodes which are respectively assigned to the plant identification codes in the tree structure contain a reference (123) to end nodes which are respectively assigned to the device names,
- when a plant identification code is registered, the assigned device name is determined,
- the root node of the partial tree for the device names is determined on the basis of the determined device name,
- the assigned root node of the partial tree for the plant identification codes is determined on the basis of the determined root node of the partial tree for the device names,
- an end node below the determined root node of the partial tree for the plant identification codes is generated for the plant identification code to be registered,
- when there is a request (135) to resolve a plant identification code (112) a device name (111) is determined on the basis of the assignments (123) between the device names and plant identification codes and a name resolution request for the determination of an assigned communication network address is made for said device name.

2. Method according to Claim 1,
in which the reference to the assigned root nodes of the partial tree for the plant identification codes is made by means of a Text Resource Record in accordance with RFC 1035 in the root node of the partial tree for the device names.

3. Method according to either of Claims 1 and 2,
in which the root node of the partial tree for the device names forms a zone head of the partial tree for the device names, in which the root node of the partial tree for the plant identification codes forms a zone head of the partial tree for the plant identification codes, and in which the zone heads are each identified by a Start of Authority Resource Record in accordance with RFC 1035.

4. Method according to one of Claims 1 to 3,
in which the references to end nodes which are respectively assigned to the device names or intermediate nodes which are respectively assigned to the plant units are made by means of CNAME Resource Records in accordance with RFC 1034 and 1035 or DNAME Resource Records in accordance with RFC 6672.

5. Method according to one of Claims 1 to 4,
in which the plant identification codes are encoded on the basis of a predefined encoding rule corresponding to Automation Domain Name Algorithm or in accordance with RFC 3405 in conjunction with RFC 2483, and having been encoded in accordance with the predefined encoding rule are stored by the name service server.

6. Method according to Claim 5,
in which a user input of a plant identification code is requested for a plant-identification-code-based addressing process of an automation device and/or communication device, in which a plant identification code which is input by a user is encoded in accordance with the predefined encoding rule, and having been encoded in accordance with the predefined encoding rule is transmitted for plant identification code resolution to the name service server, and in which the name service server resolves the plant identification code into an assigned communication network address for a plant identification code which has been encoded in accordance with the predefined encoding rule.

## Revendications

1. Procédé pour disposer d'un service de dénomination étendu d'un système d'automatisation industriel, dans lequel
- dans au moins un système de service de dénomination, comprenant au moins un serveur (102) de service de dénomination, on saisit des associations dénominationadresse, entre des dénominations (111) d'appareils et des adresses dans un réseau de communication pour des appareils (101) d'automatisation et/ou de communication, à l'aide desquelles on dispose, sur une demande de résolution de dénomination, d'une adresse associée dans le réseau de communication, dans lequel des dénominations d'appareils saisies dans le système de service de dénomination ont une répartition hiérarchique représentée par une structure arborescente, et la structure arborescente comprend un nœud racine, un nœud intérieur et un nœud pendant,
**caractérisé en ce que**
- on saisit, conformément à DIN 40719-2 ou à EN 81346, pour des appareils (101) d'automatisation et/ou de communication, en plus des associations dénominationadresse, des associations entre des dénominations (111) d'appareils et des caractéristiques (112) d'installation,
- on gère les dénominations d'appareils et les caractéristiques d'installation d'appareils d'automatisation et/ou de communication d'une installation d'automatisation au sein d'arbres (121, 122) partiels distincts, individuels à l'installation de la structure arborescente et le nœud racine de l'arbre (121) partiel comprend, pour les dénominations d'appareils, une référence au nœud racine associé de l'arbre (122) partiel des caractéristiques d'installation,
- on saisit les caractéristiques (112) d'installation au sein de la même structure arborescente que les dénominations (111) d'appareils, et des nœuds pendants, associés aux caractéristiques d'installation respectivement dans la structure arborescente, comprennent un renvoi (123) aux nœuds pendants associés respectivement aux dénominations d'appareils,
- lors d'une saisie d'une caractéristique d'installation, on détermine la dénomination d'appareil associée,
- à l'aide de la dénomination de l'appareil déterminée, on détermine le nœud racine de l'arbre partiel des dénominations d'appareil,
- à l'aide du nœud racine déterminé de l'arbre partiel des dénominations d'appareils, on détermine le nœud racine associé de l'arbre partiel des caractéristiques d'installation,
- on produit, pour les caractéristiques d'installation saisies, un nœud pendant en-dessous du nœud racine déterminé de l'arbre partiel des caractéristiques d'installation,
- s'il y a une demande (135) de résolution d'une caractéristique (112) d'installation, on détermine, à l'aide des associations (123) entre des dénominations d'appareils des caractéristiques d'installation, une dénomination (111) d'appareil et on effectue pour celle-ci une demande de résolution de dénomination pour la détermination d'une adresse associée dans le réseau de communication.

2. Procédé suivant la revendication 1,
dans lequel la référence au nœud racine associé de l'arbre partiel des caractéristiques d'installation s'effectue par un Text Resource Record, conformément à RFC 1035 dans le nœud racine de l'arbre partiel des dénominations d'appareils.

3. Procédé suivant l'une des revendications 1 à 2,
dans lequel le nœud racine de l'arbre partiel des dénominations d'appareils forme une tête de zone de l'arbre partiel des dénominations d'appareils, dans lequel le nœud racine de l'arbre partiel des caractéristiques d'installation forme une tête de zone de l'arbre partiel des caractéristiques d'installation, et dans lequel les têtes de zone sont caractérisées respectivement par un Start of Authority Resource Record, conformément à RFC 1035.

4. Procédé suivant l'une des revendications 1 à 3,
dans lequel la référence à des nœuds pendants associés respectivement aux dénominations d'appareils ou à des nœuds intermédiaires associés à des unités d'installation respectivement s'effectue au moyen de CNAME Resource Records, conformément à RFC 1034 et 1035, ou au moyen de DNAME Resource Records, conformément à RFC 6672.

5. Procédé suivant l'une des revendications 1 à 4,
dans lequel on code les caractéristiques d'installation sur la base d'une règle de codage donnée à l'avance, conformément à l'algorithme Automation Domain Name ou conformément à RFC 3405 en liaison avec RFC 2483 et, codées conformément à la règle de codage donnée à l'avance, on les met en mémoire par le serveur de service de dénomination.

6. Procédé suivant la revendication 5,
dans lequel on demande, pour un adressage reposant sur une caractéristique d'installation d'un appareil d'automatisation et/ou de communication, une entrée d'utilisateur d'une caractéristique d'installation, dans lequel on code, conformément à la règle de codage donnée à l'avance, une caractéristique d'installation entrée par un utilisateur et, pour une résolution de caractéristique d'installation, on la transmet au serveur de service de dénomination, et dans lequel le serveur de service de dénomination effectue, pour une caractérisation d'installation codée conformément à la règle de codage donnée à l'avance, une résolution de la caractéristique d'installation en une adresse associée dans le réseau de communication.
